# NEUE EUROPÄISCHE PATENTSCHRIFT

(11) **EP 3 069 202 B2**
(45) Veröffentlichungstag und Bekanntmachung des Hinweises auf die Entscheidung über den Einspruch: **25.09.2024**
(45) Hinweis auf die Patenterteilung: 24.07.2019
(21) Anmeldenummer: 14796765.7
(22) Anmeldetag: 12.11.2014
(51) Int. Cl.: G05B 19/042

(54) **SICHERHEITSSTEUERUNG MIT KONFIGURIERBAREN EINGÄNGEN**
SAFETY CONTROL SYSTEM HAVING CONFIGURABLE INPUTS
COMMANDE DE SÉCURITÉ À ENTRÉES CONFIGURABLES

(30) Priorität: 13.11.2013 DE 102013112488
(43) Veröffentlichungstag der Anmeldung: 21.09.2016
(73) Patentinhaber: Pilz GmbH & Co. KG, 73760 Ostfildern (DE)
(72) Erfinder: HUTT, Thilo, 73760 Ostfildern (DE); SEIZINGER, Dietmar, 73760 Ostfildern (DE); KLUGE, Marco, 73760 Ostfildern (DE); LEHMANN, Stephan, 73760 Ostfildern (DE)
(74) Vertreter: Witte, Weller & Partner Patentanwälte mbB
(86) Internationale Anmeldenummer: PCT/EP2014/074389
(87) Internationale Veröffentlichungsnummer: WO 2015/071321

(56) Entgegenhaltungen:
- EP-A2- 2 461 221
- EP-A2- 2 511 778
- US-A1- 2009 187 306

## Beschreibung

Die vorliegende Erfindung betrifft eine Sicherheitssteuerung zum Ein- und sicheren Ausschalten mindestens eines Aktors, mit zumindest einem Eingangsmodul zum Auswerten eines Eingangssignals eines Sicherheitsgebers und zum Erzeugen eines Ausgangssignals und mit zumindest einem Ausgangsmodul zum sicheren Betätigen des Aktors abhängig von dem Ausgangssignal des Eingangsmoduls, wobei das Eingangssignal in Abhängigkeit der Art des Sicherheitsgebers verschiedene Signalparameter aufweist, wobei die Sicherheitssteuerung eine Einstelleinheit mit einem Speicher aufweist, in dem die Signalparameter für das Eingangsmodul hinterlegt werden, und wobei das Eingangsmodul das Eingangssignal in Abhängigkeit der Signalparameter auswertet.

Eine derartige Sicherheitssteuerung ist beispielsweise aus EP 2 511 778 A2 bekannt.

Demnach ist eine Sicherheitssteuerung im Sinne der vorliegenden Erfindung eine vorzugsweise modulare Vorrichtung mit mindestens einem Eingangsmodul und einem Ausgangsmodul. Die Eingangsmodule nehmen Eingangssignale von angeschlossenen Sicherheitsgebern, wie beispielsweise Lichtschranken, Lichtgittern, Not-Aus-Tastern oder Schutztürschaltern, auf und erzeugen daraus durch logische Verknüpfung Ausgangssignale. In Abhängigkeit der Ausgangssignale steuern die Ausgangsmodule Aktoren an, die in Abhängigkeit von den Eingangssignalen gezielte Aktionen oder Reaktion in der Umgebung bewirken, z.B. um eine Maschine wie eine Presse oder einen Schweißroboter, von denen im Betrieb eine Gefahr ausgeht, abzuschalten oder in einen sicheren Zustand zu überführen.

Bei den Sicherheitsgebern wird zwischen zwei Arten von Sicherheitsgebern unterschieden. Die erste Art von Sicherheitsgebern sind passive Sicherheitsgeber, die selbst kein Eingangssignal erzeugen. Passive Sicherheitsgeber erhalten von extern, meistens von der Sicherheitssteuerung, ein Testsignal in Form eines statischen Potenzials oder eines Taktsignals und senden dieses, wenn der Sicherheitsgeber einen sicheren Zustand anzeigt, unverändert an eine auswertende Sicherheitssteuerung. Ändert sich der Zustand, beispielsweise weil der Sicherheitsgeber betätigt worden ist, unterbricht der Sicherheitsgeber den Signalfluss. Die Sicherheitssteuerung erkennt den Zustandswechsel anhand des ausbleibenden Signals.

Ein passiver Sicherheitsgeber ist beispielsweise ein zweikanaliger Not-Aus-Schalter mit zwei Öffner-Kontakten. Öffner-Kontakt bedeutet in diesem Zusammenhang, dass der zu schaltende Signalpfad in normalen, nicht-betätigten Zustand geschlossen ist. Folglich liegen im nicht-betätigten Zustand Testsignale, die eingangsseitig an den Sicherheitsgeber herangeführt sind, unverändert an dessen Ausgängen an. Die vom Sicherheitsgeber ausgehenden Signale wiederum sind die Eingangssignale der auswertenden Sicherheitssteuerung, so dass in normalem Betrieb immer ein Eingangssignal an der Sicherheitssteuerung anliegt. Sobald der Not-Aus-Schalter betätigt wird, wird der Signalfluss unterbrochen und die Eingangssignale bleiben aus. Die Sicherheitssteuerung kann daraufhin die zu überwachende abschalten oder in einen sicheren Zustand überführen.

Ferner sind antivalente zweikanalige Sicherheitsgeber als passive Sicherheitsgeber bekannt, die anstelle von zwei Öffner-Kontakten einen Öffner- und einen Schließer-Kontakt aufweisen, die zueinander zwangsgeführt sind. Ein Schließer-Kontakt ist das Gegenteil eines Öffner-Kontakts, d.h. beim Schließer-Kontakt ist der Signalpfad standardmäßig getrennt und erst beim Betätigen des Schalters geschlossen. Bei einem antivalente zweikanaligen Sicherheitsgeben ist somit in jedem Zustand ein Signalpfad geschlossen und ein weitere Signalpfad geöffnet. Die Sicherheitssteuerung erkennt in diesem Fall den Zustandswechsel daran, dass an einem Eingang, an dem zuvor kein Signal anlag, ein Signal anliegt, während an einem zweiten Eingang das Signal ausbleibt.

Als weitere Art von Sicherheitsgebern sind aktive Sicherheitsgeber bekannt. Diese erzeugen selbsttätig ein Eingangssignal, welches ihren jeweiligen Zustand repräsentiert. Aktive Sicherheitsgeber werden auch als Output Signal Switching Device (OSSD) und ihre Eingangssignale für die Sicherheitssteuerung als OSSD-Signale bezeichnet und sind in der Regel komplexere Sicherheitsgeber, wie Lichtschranken und Lichtgitter. OSSDs verfügen meist über eine eigene Elektronikeinheit zur Auswertung der Überwachungskomponenten und zum Erzeugen des OSSD-Signals. Wie bei passiven Sicherheitsgeber erkennt die zugehörige Sicherheitssteuerung den Zustandswechsel eines aktiven Sicherheitsgebers daran, dass die Eingangssignale ausbleiben oder sich ändern.

Sowohl bei passiven als auch bei aktiven Sicherheitsgebern ist das Eingangssignal, welches den Zustand des Sicherheitsgebers repräsentiert, in der Regel ein statisches Potenzial, welches bevorzugt mit Testimpulsen überlagert wird, um Fehler beim Anschluss der Sicherheitsgeber sowie Kurz- und Querschlüsse auf den Signalleitungen erkennen zu können. Darüber hinaus können mittels der Testimpulse auch Abschalttests durchgeführt werden. Die Taktsignale werden in der Regel von der Sicherheitssteuerung erzeugt und bei passiven Sicherheitsgebern direkt oder bei aktiven Sicherheitsgebern indirekt den Eingangssignalen überlagert. Durch Rücklesen der Taktsignale an den Eingängen kann die Sicherheitssteuerung auf etwaige Fehler schließen.

Bei passiven Sicherheitsgebern erfolgt die Überlagerung mit einem dynamischen Taktsignal in der Regel direkt, indem bereits die Testsignale, die an den Sicherheitsgebern gesendet werden, den Takt aufweisen. Bei aktiven Sicherheitsgebern, die das Eingangssignal selbsttätig erzeugen, können die dynamischen Taktsignale entweder nach einem festgelegten Schema selbst generiert werden oder von extern getriggert sein. Letzteres erfolgt über einen separaten Testeingang am Sicherheitsgeber, an dem ein Takt eingespeist werden kann, anhand dessen der Sicherheitsgeber dem Eingangssignal Testimpulse aufprägen kann.

Um die unterschiedlichen Arten von Sicherheitsgeber an eine Sicherheitsteuerung anzuschließen, ist es denkbar, für jede Art von Sicherheitsgeber ein spezielles Eingangsmodul vorzusehen. Alternativ sind Eingangsmodule möglich, die Filter an den Eingängen aufweisen, die es erlauben, unterschiedliche Arten von Sicherheitsgeber an ein Eingangsmodul anzuschließen. Die Filter unterdrücken Testimpulse, so dass statische Signale für die logische Auswertung bereitstehen. Dies führt jedoch zwangsläufig dazu, dass die Auswertung insgesamt verzögert wird und somit die Ansprechzeit der Sicherheitssteuerung ansteigt.

Weiterhin sind Eingangsmodule bekannt, die verschiedene Eingänge aufweisen und je nach Beschaltung dieser Eingänge auf die Art des angeschlossenen Sicherheitsgebers schließen. Eine derartiges Sicherheitsschaltgeräte ist beispielsweise in der DE 197 07 241 A2 offenbart. Nachteilig bei diesen Geräten ist jedoch, dass die Eingangsmodule zusätzlich Eingänge aufweisen, wodurch eine Verdrahtung aufwendiger und fehleranfälliger ist. Darüber hinaus können mit diesen Eingangsmodulen auch nur eine begrenzte Anzahl von unterschiedlichen Sicherheitsgeberarten abgedeckt werden.

Die eingangs genannte EP 2 511 778 A2 offenbart ein Eingangsmodul für eine Industriesteuerung mit konfigurierbarer Einrichtung zur Vereinfachung der Inbetriebnahme. Das Eingangsmodul umfasst konfigurierbare Eingangsanschlüsse wie beispielsweise Zählereingänge. Ferner können weitere Eingangsanschlüsse vorhanden sein, die eingerichtet sind, in Abhängigkeit der an den Anschlüssen vorhandenen Eingangssignale Ereignisse auszulösen.

Es ist daher eine Aufgabe der vorliegenden Erfindung, eine bessere Sicherheitssteuerung anzugeben, die flexibler und kostengünstiger mit einer Vielzahl von verschiedenen Sicherheitsgebern verwendbar ist.

Gemäß einem Aspekt der Erfindung wird diese Aufgabe durch eine Sicherheitssteuerung gemäß Anspruch 1 gelöst.

Gemäß einem weiteren Aspekt der Erfindung wird die Aufgabe durch ein Verfahren gemäß Anspruch 8 gelöst.

Es ist somit eine Idee der vorliegenden Erfindung, die Sicherheitsteuerung, insbesondere die Eingangsmodule, konfigurierbar zu machen, so dass eine individuelle Anpassung an die angeschlossenen Sicherheitsgeber erfolgen kann. Die Sicherheitsteuerung weist hierzu entweder in den Eingangsmodulen selbst oder in einer zentralen Kopfeinheit eine Einstelleinheit auf, in der Signalparameter hinterlegt werden können. Signalparameter sind Angaben, mit denen sich die Eigenschaften des Eingangssignals beschreiben lassen, beispielsweise die die physikalische Darstellungsgröße wie Amplitude, Phase oder Frequenz eines Signals. Darüber hinaus können die Signalparameter auch relative Angaben enthalten, die eine durch den Signalgeber hervorgerufene Signaländerung beschreiben.

Die Einstelleinheit kann beispielsweise ein programmierbarer Speicher sein, in dem Parameterwerte als Variabel hinterlegbar sind. Die Programmierung kann manuell durch Nutzereingaben an der Sicherheitsteuerung oder durch Aufspielen externer Daten erfolgen. Alternative können Signalparameter auch durch die angeschlossen Sicherheitsgeber an die Sicherheitssteuerung übertragen werden.

Die hinterlegbaren Signalparameter beschreiben das Eingangssignal des angeschlossenen Sicherheitsgebers und können von dem Eingangsmodul für die Auswertung herangezogen werden. Somit lässt sich die Auswertung präziser auf das zu erwartende Eingangssignal einstellen. Die Reaktionszeit der Sicherheitssteuerung bestimmt sich im Wesentlichen aus der Signallaufzeit, also der Zeitdauer, die benötigt wird vom Betätigen des Sicherheitsgebers bis hin zum Auslösen des Ausgangssignals und das Umschalten der angeschlossenen Aktoren. Die Signallaufzeit ergibt sich somit aus der Summe der einzelnen Verarbeitungszeiten der beteiligten Komponenten. Während die Verarbeitungszeiten der elektronischen Bauteile im Sicherheitsgeber und der Sicherheitssteuerung durch die jeweilige Gatterlaufzeit (propagation delay) bestimmt werden, welche üblicherweise im Bereich weniger Nanosekunden liegen, ist die Dauer der Auswertung der Eingangssignale an den Eingängen aufgrund von Eingangsfiltern und Auswertetoleranzen deutlich höher. Ist der Sicherheitssteuerung jedoch das zu erwartende Eingangssignal bekannt, können die Eingangsfilter auf das Eingangssignal eingestellt werden oder gegebenenfalls sogar entfallen. Ebenso können für eine Schwellwertdetektion die jeweiligen Toleranzbereiche, in denen ein bestimmter Wert des Eingangssignals sicher erkannt wird, verringert werden. Die Auswertung wird dadurch zuverlässiger und insbesondere schneller, wodurch die Verfügbarkeit und die Reaktionsgeschwindigkeit der Sicherheitssteuerung insgesamt erhöht werden.

Besonders vorteilhaft können mit der neuen Sicherheitssteuerung Sicherheitsgeber verschiedener Hersteller verwendet werden. An die neue Sicherheitssteuerung können alle handelsüblichen Sicherheitsgeber angeschlossen werden. Die Sicherheitssteuerung wird dadurch insgesamt flexibler. Insbesondere kann eine derartige Sicherheitsteuerung einfach bei bestehenden Anlagen nachgerüstet werden.

Neben der präziseren Auswertung der Zustände der Sicherheitsgeber können vorteilhafterweise auch die überlagerten Testsignale erkannt und detailliert ausgewertet werden. Damit ist es möglich auch Sicherheitsgeber zu verwenden, die zuvor spezielle Eingangsmodule benötigten. Insbesondere aktive Sicherheitsgeber, die von der Steuereinheit unabhängig die Eingangssignale mit Testsignale belegen, können an der neuen Sicherheitssteuerung verwendet werden, ohne dass ein spezielles, oft proprietäres Eingangsmodul verwendet werden muss.

Das Eingangssignal ist ein dynamisches Taktsignal, welches im regelmäßigen Takt mit Testimpulsen belegt wird. Die Testimpulse sind vorzugsweise Rechteckimpulse mit einer definierten Impulsdauer, die sich innerhalb einer festgelegten Testperiode wiederholen. Vorzugsweise sind die Testperiode bzw. Testpulsdauer als Signalparameter hinterlegt, so dass bei der Auswertung bekannt ist, wann ein Testimpuls am Eingang auftritt und wie lange dieser dauert. Somit kann zum einen sichergestellt werden, dass ein Zustandswechsel am Eingang nicht fälschlicher weise als Zustandsänderung der Sicherheitsbedingungen aufgefasst wird und zum anderen kann überprüft werden, ob die Testimpulse im bestimmungsgemäßen Abstand und Dauer auftreten. Auf diese Weise können Verdrahtungsfehler, Fehler der Sicherheitsgeber oder Quer-/Kurzschlüsse auf den Signalleitungen aufgedeckt werden.

In einer weiteren Ausgestaltung weist das Eingangsmodul einen ersten Eingang zum Anschließen des Sicherheitsgebers und mindestens einen zweiten Eingang zum Anschließen eines weiteren Sicherheitsgebers auf, wobei für den Sicherheitsgeber ein erste Satz an Signalparametern und für den weiteren Sicherheitsgeber ein zweiter Satz an Signalparametern in der Einstelleinheit hinterlegbar sind.

In dieser Ausgestaltung werden die Signalparameter für einen Sicherheitsgeber somit zu einem Satz zusammengefasst. Ferner kann ein Eingangsmodul mehrere Eingänge aufweisen, für die verschiedene Parametersätze hinterlegt sind. Auf diese Weise kann ein einzelnes Eingangsmodul gleichzeitig verschiedene Signale unterschiedlicher Sicherheitsgeber verarbeiten. Vorzugsweise weist ein Eingangsmodul zusätzlich noch verschiedene Taktausgänge auf, über die die Sicherheitsgeber an den Eingängen mit unterschiedlichen Taktsignalen belegt werden können. Die Flexibilität der Eingangsmodule wird durch die zusätzlichen Eingänge weiter erhöht.

In einer weiteren Ausgestaltung weist die Sicherheitssteuerung mindestens einen Testausgang zum Bereitstellen eines Testsignals auf, wobei der Sicherheitsgeber mit einer Verzögerungszeit Δt in Abhängigkeit des Testsignals das Eingangssignal erzeugt, wobei die Verzögerungszeit Δt ein Parameter der Signalparameter ist.

In dieser Ausgestaltung weist mindestens ein Sicherheitsgeber einen Testeingang zum Aufnehmen eines Testsignals auf, mit dem die Funktionsfähigkeit des Sicherheitsgebers überprüft werden kann. Als Testsignal kann beispielsweise zyklisch ein Testimpuls an den Sensor gesendet werden. Der Sicherheitsgeber reagiert auf den Testimpuls vorzugsweise mit einem gleichartigen Impuls auf dem vom Sicherheitsgeber erzeugten Eingangssignal. Je nach Sensortyp kann sich die Antwort des Sicherheitsgebers um ein Verzögerungszeit Δt verzögern. Der Wert für Δt wird mit den Signalparametern in der Einstelleinheit hinterlegt und beim Auswerten berücksichtigt. Auf diese Weise können auch die Eingangssignale, beispielsweise von aktiven Sicherheitsgebern mit extern getriggerten Test, sicherer und präziser ausgewertet werden.

Der Sicherheitsgeber ist mit der Sicherheitssteuerung über eine elektrische Leitung mit spezifischen Eigenschaften verbunden, wobei die Signalparameter weitere Parameter aufweisen, die die spezifischen Eigenschaften repräsentieren.

Zu den spezifischen Eigenschaften zählen beispielsweise der verwendete Kabeltyp, die Kabellänge oder sonstige Werte der elektrischen Leitung, die das Eingangssignal auf irgendeine Art und Weise ändern oder beeinflussen. Auf diese Weise kann eine noch präzisere Anpassung an die Sicherheitsgeber erfolgen, die nicht nur von den Signalgebern sondern auch von anwendungsspezifischen Eigenschaften abhängen. Insbesondere können kapazitive Effekte auf der Leitung das Eingangssignal stark beeinflussen und ein sicheres Auswerten verzögern. Sind für die Auswertung die kapazitiven Effekte bekannt, kann die Auswertezeit, beispielsweise über Eingangsfilter, entsprechend angepasst werden.

In einer weiteren Ausgestaltung weist die Sicherheitssteuerung zur Konfiguration der Einstelleinheit ein Konfigurationssystem mit einer Kommunikationsschnittstelle auf, wobei ein Satz an Signalparametern über die Kommunikationsschnittstelle an die Einstelleinheit übertragen werden kann.

Über das Konfigurationssystem kann die Einstelleinheit mit Signalparameter programmiert werden. Vorzugsweise kann ein Satz an Signalparameter auf einem externen System, beispielsweise einem PC, zusammengestellt und anschließend als Block auf eine oder mehrere Sicherheitssteuerungen übertragen werden. Als Kommunikationsschnittstelle kann ein Netzwerk- oder Busanschluss verwendet werden. Alternative kann die Kommunikationsschnittstelle auch als Lesegerät für ein portables Speichermedium ausgestaltet sein. Über das Konfigurationssystem kann eine sichere Konfiguration ermöglicht werden.

Besonders bevorzugt ist der Satz an Parametern für einen Sicherheitsgeber in einer Sensordefinitionsdatei hinterlegt, wobei die Sensordefinitionsdatei einen Sensordatenabschnitt mit sicherheitsgeberspezifischen Parametern und einen Anwendungsdatenabschnitt mit anwendungsspezifischen Parametern umfasst.

Auf diese Weise werden sensorabhängige und anwendungsabhängige Daten voneinander getrennt abgelegt und erst für den spezifischen Anwendungsfall zusammengeführt. Dies hat den Vorteil, dass die anwendungsspezifischen Parameter erste bei der Inbetriebnahme angegeben werden müssen, während die Daten des Sicherheitsgebers (elektronisches Datenblatt) vorzugsweise aus einer Bibliothek heraus bereitgestellt werden. Die Einstellung wird dadurch zum einen leichter und darüber hinaus sicherer, da keine fälschlichen Parameter für einen Sensor eingetragen werden können.

Besonders bevorzugt weist darüber hinaus die Sensordefinitionsdatei eine individuelle Prüfsumme auf, anhand derer das Konfigurationssystem die Sensordefinitionsdatei authentifiziert. Auf diese Weise wird die Sensordefinitionsdatei vor Modifikationen geschützt, die zu einer fehlerhaften Konfiguration der Sicherheitssteuerung führen könnten.

Ferner weist das Konfigurationssystem in einer besonders bevorzugten Ausgestaltung einen Prüfalgorithmus zur Plausibilitätsprüfung auf, der den Anwendungsdatenabschnitt im Bezug auf den Sensordatenabschnitt überprüft. Mit Hilfe des Plausibilitätschecks wird überprüft, ob die vom Benutzer eingegebenen anwendungsspezifischen Parameter mit den sensorspezifischen Parametern zusammenpassen. Der Plausibilitätscheck könnte beispielsweise eine Kontrolle beinhalten, die sicherstellt, dass die verwendete Kabellänge einen für den Sicherheitsgeber festgelegten Grenzwert nicht überschreitet. Ebenso könnte mittels des Plausibilitätschecks gewährleistet werden, dass die Konfiguration einem entsprechenden Sicherheitslevel entspricht. Weiterhin können Verschaltungsfehler frühzeitig bereits bei der Konfiguration festgestellt und ausgeschlossen werden. Die Sicherheitssteuerung und deren Konfiguration werden dadurch sicherer und weniger fehleranfällig.

Ausführungsbeispiele der Erfindung sind der Zeichnung dargestellt und werden in der nachfolgenden Beschreibung näher erläutert. Es zeigen:
- Fig. 1: eine vereinfachte Darstellung eines bevorzugten Ausführungsbeispiels der neuen Sicherheitssteuerung,
- Fig. 2: eine schematische Darstellung verschiedener Arten von Sicherheitsgebern,
- Fig. 3: eine schematische Darstellung der neuen Sicherheitssteuerung,
- Fig. 4: eine schematische Darstellung der Konfiguration der neuen Sicherheitssteuerung.

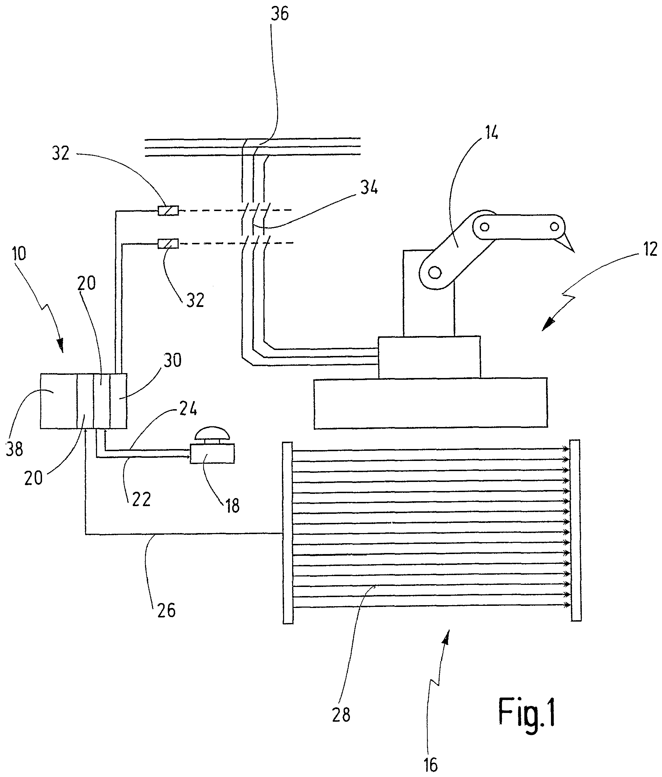

In der Fig. 1 ist ein Ausführungsbeispiel der neuen Sicherheitssteuerung in seiner Gesamtheit mit der Bezugsziffer 10 bezeichnet. Bei dem gezeigten Ausführungsbeispiel handelt es sich um eine Sicherheitssteuerung, die hier zum Absichern einer technischen Anlage 12 verwendet wird. Die technische Anlage 12 ist in diesem Beispiel ein automatisiert arbeitender Roboter 14, dessen Gefahrenbereich zum Schutz von Personen durch ein Lichtgitter 16 begrenzt ist. Ferner ist mit der Bezugsziffer 18 ein Notausschalter angedeutet, mit dem der Roboter bei Gefahr abgeschaltet werden kann.

Das Lichtgitter 16 und der Notausschalter 18 sind je mit einem Eingangsmodul 20 der Sicherheitssteuerung 10 verbunden. Die Verbindung des Notausschalters 18 erfolgt über eine erste Leitung 22 und über eine zweite Leitung 24. Das Lichtgitter 16 ist über eine einzelne Leitung 26 mit dem Eingangsmodul 20 verbunden.

Bei dem Lichtgitter 16 und dem Notausschalter 18 handelt es sich um unterschiedliche Arten von Sicherheitsgebern. Das Lichtgitter 16 ist ein aktiver Sicherheitsgeber und der Notausschalter 18 ist ein passiver Sicherheitsgeber. Die Sicherheitsgeber unterscheiden sich, wie gezeigt, zum einen in der Anschlussart und zum anderen in der Signalisierung des Zustands des zu überwachenden sicherheitskritischen Prozesses.

Das Lichtgitter 16 ist ein sogenanntes OSSD-Gerät. Es ist dazu ausgebildet selbsttätig ein Signal zu erzeugen, welches den jeweiligen Zustand des Lichtgitters angibt. Ist das Lichtgitter im Normalbetrieb, d.h. die zur Bestimmung des sicherheitskritischen Zustands relevanten Lichtstrahlen 28 sind nicht durch ein Gegenstand oder eine Person unterbrochen, sendet das Lichtgitter 16 über die Leitung 26 ein definiertes Eingangssignal an die Sicherheitssteuerung. Das von einem aktiven Sicherheitsgeber erzeugte Signal wird oft auch als OSSD-Signal und die entsprechende Leitung als OSSD-Leitung bezeichnet. Vorzugsweise wird das OSSD-Signal redundant vom Sicherheitsgeber zur Sicherheitssteuerung 10 übertragen. Die OSSD-Leitung 26 ist somit vorzugsweise zweikanalig ausgelegt, wobei dies üblicherweise über eine Leitung mit mehreren Adern geschieht, in der jede Ader das Signal eines einzelnen Kanals überträgt. In einem anderen Ausführungsbeispiel kann das Lichtgitter 16 zusätzlich einen Testeingang zum Aufnehmen eines Testsignals aufweisen, über den sich gezielt das OSSD-Signal, wie im Folgenden noch näher zu erläutern ist, beeinflussen lässt. Die Testsignale können u.a. dazu verwendet werden einen Querschluss zwischen zwei Adern einer einzelnen Leitung zu erkennen.

Bei dem Notausschalter 18 handelt es sich um einen passiven Sicherheitsgeber, der selbsttätig kein Signal erzeugt. Vielmehr wird dem passiven Sicherheitsgeber von außen, vorzugsweise von der Sicherheitssteuerung, ein Testsignal zugeführt, welches der passive Sicherheitsgeber ausgangsseitig als Eingangssignal bereitstellt. Im gezeigten Ausführungsbeispiel wird über die Leitung 22 ein Signal an den Notausschalter 18 herangeführt. Der Notausschalter 18 weist hier zwei Öffner-Kontakte auf, die im nicht betätigten Zustand das Signal von der Leitung 22 zur Leitung 24 führen. Über die Leitung 24 gelangt das Testsignal somit als Eingangssignal zurück zum Eingangsmodul 20. Wird der Notausschalter 18 betätigt, werden die Öffner-Kontakte geöffnet und der Signalfluss von der Leitung 22 zur Leitung 24 unterbrochen.

Sowohl das Lichtgitter 16 als auch der Notausschalter 18 zeigen somit den Zustand, den sie repräsentieren, dadurch an, dass sie entweder ein Eingangssignal an das Eingangsmodul 20 senden oder nicht. Dabei wird der sicherheitskritische Zustand vorzugsweise durch den Wegfall des Eingangssignals repräsentiert.

Bleibt somit das Eingangssignal von einem der beiden Sicherheitsgeber 16, 18 aus, kann die Sicherheitssteuerung den Roboter 14 abschalten oder in einen ungefährlichen Zustand überführen. Im vorliegenden Ausführungsbeispiel verfügt die Sicherheitssteuerung 10 hierzu über ein Ausgangsmodul 30, an dem zwei Schütze 32 angeschlossen sind. Die Kontakte 34 der Schütze 32 liegen in Serie geschaltet, in der Stromversorgung 36 des Roboters 14. Wenn beide Schütze 32 angezogen sind, wird der Roboter 14 mit Strom versorgt.

Wenn an einem der Eingangsmodule 20 das Eingangssignal der Sicherheitsgeber 16, 18 ausbleibt, veranlasst die Sicherheitssteuerung 10 über das Ausgangsmodul 30, dass die Schütze 32 abfallen und der Roboter 14 von der Stromversorgung 36 getrennt wird.

Über ein Kopfmodul 38 kann die Sicherheitssteuerung 10 zusätzlich mit einer übergeordneten, hier nicht näher dargestellten Steuerung verbunden sein. Die Verbindung zur übergeordneten Steuerung kann über gängige Feldbussysteme für Standardsteuerfunktion oder aber über spezielle sichere Busse, wie beispielsweise den Safetybus P, den die Anmelderin für sicherheitsgerichtete Funktionen vertreibt, erfolgen. Das Kopfmodul 38 umfasst somit zumindest eine zentrale Verarbeitungseinheit und eine Schnittstellen zur Kommunikation.

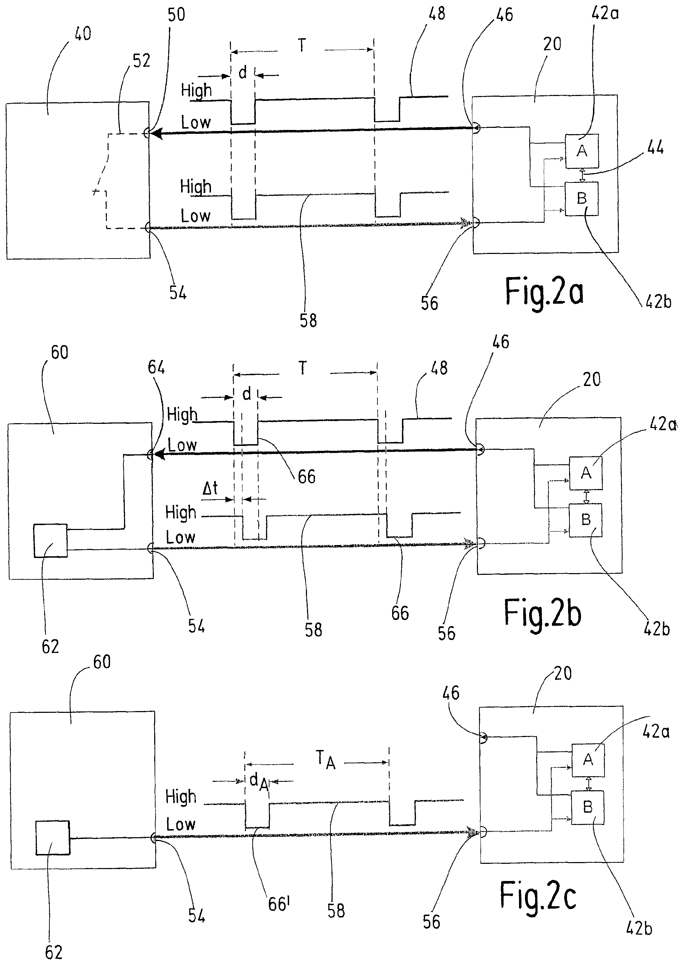

Anhand der Fig. 2a, 2b und 2c werden im Folgenden die verschiedenen Arten von Sicherheitsgebern näher erläutert.

Fig. 2a zeigt in einer schematischen Darstellung einen passiven Sicherheitsgeber 40, der an ein Eingangsmodul 20 angeschlossen ist. Bei dem passiven Sicherheitsgeber 40 könnte es sich beispielsweise um einen Notausschalter 18 gemäß dem Ausführungsbeispiel nach Fig. 1 handeln. Das Eingangsmodul 20 weist hier eine erste und eine zweite Auswerteeinheit 42a, 42b auf. Vorzugsweise handelt es sich dabei um zwei Mikrocontroller, die dazu ausgebildet sind, ein Eingangssignal redundant auszuwerten. Alternativ kann die Auswertung auch durch eine andere signalverarbeitende Einheit erfolgen. Die Auswerteeinheiten 42a, 42b sind so ausgebildet, dass sie sich gegenseitig überwachen können, wie durch den Doppelpfeil 44 angedeutet. Durch die Überwachung 44 und die vorzugsweise unterschiedliche Ausbildung der Auswerteeinheiten 42a und 42b kann eine sehr hohe Sicherheit beim Auswerten der Eingangssignale sichergestellt werden.

Das Eingangsmodul 20 weist einen Testausgang 46 auf. Über den Testausgang 46 wird von den Auswerteeinheiten 42a, 42b ein Testsignal 48 bereitgestellt. Das Testsignal 48 ist hier ein statisches Potential, das dynamisiert wird, indem in einem Intervall T, die sogenannte Testperiode, für eine Testpulsdauer d das Testsignal ausgesetzt wird. Das Testsignal 48 wird von einem Sicherheitsgebereingang 50 aufgenommen und über einen hier gestrichelt dargestellten Öffner-Kontakt 52 zu einem Sicherheitsgeberausgang 54 geleitet. Der Sicherheitsgeberausgang 54 ist mit dem Eingang 56 des Eingangsmoduls 20 verbunden, so dass das Testsignal 48 unmittelbar und unverändert als Eingangssignal 58 am Eingang 56 anliegt.

Aufgrund der unmittelbaren Verbindung zwischen Sicherheitsgebereingang 50 und Sicherheitsgeberausgang 54 durch den Öffner-Kontakt 52 liegt im Normalfall am Eingang 56 das gleiche Signal an wie am Testausgang 46. Die Auswerteeinheit 42a, 42b kann daher den erwarteten Signalverlauf des Eingangssignals 56 unmittelbar vom Testsignal 48 ableiten. Die Fig. 2a zeigt den idealisierten Signalverlauf des Testsignals 48 und des Eingangssignals 58. Idealisiert dargestellt sind die Ein- und Abschaltflanke, die real nicht sprunghaft an- und absteigen, sondern jeweils mit einer Verzögerung einhergehen, wobei die Verzögerung in Form der Rampen- bzw. Flankensteilheit einer der Signalparameter seien kann, die das Eingangssignal beschreiben.

Fig. 2b zeigt ein weiteres Eingangsmodul 20 ebenfalls mit einer redundanten Auswerteeinheit 42a, 42b sowie einem Testsignalausgang 46 und einem Eingang 56. Über den Testsignalausgang 46 wird wie bei der Fig. 2a ein Testsignal 48 mit einer Testperiode T und einer Testpulsdauer d bereitgestellt. Bei dem angeschlossenen Sicherheitsgeber handelt es sich in diesem Fall um einen aktiven Sicherheitsgeber 60. Bei dem aktiven Sicherheitsgeber 60 könnte es sich beispielsweise um eine Lichtschranke oder ein Lichtgitter gemäß dem Ausführungsbeispiel der Fig. 1 handeln. Der aktive Sicherheitsgeber 60 weist im Gegensatz zu einem passiven Sicherheitsgeber 40 eine Signalgebereinheit 62 auf, die selbsttätig ein Eingangssignal 58 erzeugt und am Sicherheitsgeberausgang 54 bereitstellt.

Der aktive Sicherheitsgeber 60 nimmt im Ausführungsbeispiel gemäß Fig. 2b an einem Testeingang 64 das Testsignal 48 des Eingangsmoduls auf. Das Testsignal 48 wird der Signalgebereinheit 62 bereitgestellt, so dass die Signalgebereinheit 62 beim Generieren des Eingangssignals 58 das Testsignal 48 berücksichtigen kann. Im Ausführungsbeispiel gemäß Fig. 2b überträgt die Signalgebereinheit 62 die Testimpulse 66 auf das Eingangssignal 58. Die Testimpulse 66 auf dem Eingangssignal 58 haben somit idealisiert die gleiche Testperiodendauer T und die gleiche Testpulsdauer d. Die Testimpulse 66 des Eingangssignals können jedoch zu den Testimpulsen 66 des Testsignals 48 um eine Verzögerungszeit Δt verschoben sein. Die Verzögerungszeit kann beispielsweise auf die Signalverarbeitung durch die Signalgebereinheit 62 verursacht sein. Die Auswerteeinheiten 42a, 42b können aufgrund der Verzögerungszeit Δt den Signalverlauf des Eingangssignals 58 nicht unmittelbar vom Testsignal 48 ableiten.

Bei der neuen Sicherheitsteuerung kann die Verzögerungszeit Δt als ein weiterer Signalparameter in der hier nicht dargestellten Einstelleinheit hinterlegt sein. Die Auswerteeinheiten 42a, 42b können diesen Wert auslesen und bei der Auswertung berücksichtigen. Somit können die Auswerteeinheiten 42a, 42b unmittelbar auf das Eingangssignal eingestellt werden, wodurch die Auswertung beschleunigt wird, da kein zusätzlicher Toleranzbereich einzurichten ist.

Fig. 2c zeigt eine weitere Anschlussmöglichkeit für einen aktiven Signalgeber 60 an ein Eingangsmodul 20. Der Testausgang 46 des Eingangsmoduls 20 ist in diesem Ausführungsbeispiel nicht belegt. Es besteht lediglich eine Verbindung zwischen dem Sicherheitsgeberausgang 54 und dem Eingangsmoduleingang 56. Der aktive Sicherheitsgeber 60 erzeugt mittels der Signalgebereinheit 62 selbsttätig ein Ausgangssignal 58. Die Signalgebereinheit 62 moduliert dem Eingangssignal 58 dabei selbsttätig Testimpulse 66' auf. Die Testimpulse 66' wiederholen sich mit einer Periodendauer T_{A} bei einer Testimpulsdauer d_{A}. Die Testimpulse 66' werden somit unabhängig von Eingangsmodul 20 erzeugt. Die Auswerteeinheit 42 kann daher keine Referenzgröße zur Auswertung des Eingangssignals 58 heranziehen. Bei der neuen Sicherheitsteuerung können die Werte für die Periodendauer T_{A} und/oder die Testimpulsdauer d_{A} hinterlegt werden. Die Auswerteeinheiten 42a, 42b können auf diese Werte zurückgreifen und das Eingangssignal 58 entsprechend auswerten.

Die in den Fig. 2a-c gezeigt Ausführungsbeispiele von Sicherheitsgebern 40, 60 können trotz der unterschiedlichen Eingangssignale, die sie erzeugen, alle an die neue Sicherheitssteuerung angeschlossen werden. Dazu werden vom Benutzer die für den jeweiligen Sicherheitsgeber spezifischen Signalparameter in der Einstelleinheit hinterlegt und dem entsprechenden Eingangsmodul zur Verfügung gestellt. Durch Anpassen der Signalparameter kann das Eingangsmodul variable auf die verschiedenen Sicherheitsgeber angepasst werden. Dabei können für mehrere Eingangsmodule auch verschiedene Sätze von Signalparametern in der Einstelleinheit hinterlegt werden.

Es versteht sich, dass die Signalparameter nicht auf die gezeigten Beispiele beschränkt sind. Neben den genannten Beispielen werden auch weitere, das Eingangssignal 58 beschreibende Angaben als Signalparameter verwendet. Neben absoluten Angaben sind auch relative Angaben oder Gewichtungsfaktoren denkbar. Die Signalparameter sind nicht auf Einflüsse der Sicherheitsgeber beschränkt, sondern umfassen auch anderer Parameter, die das Eingangssignal beschreiben, wie beispielsweise Wert für die Kapazität und/oder den Widerstand der Zuleitungen.

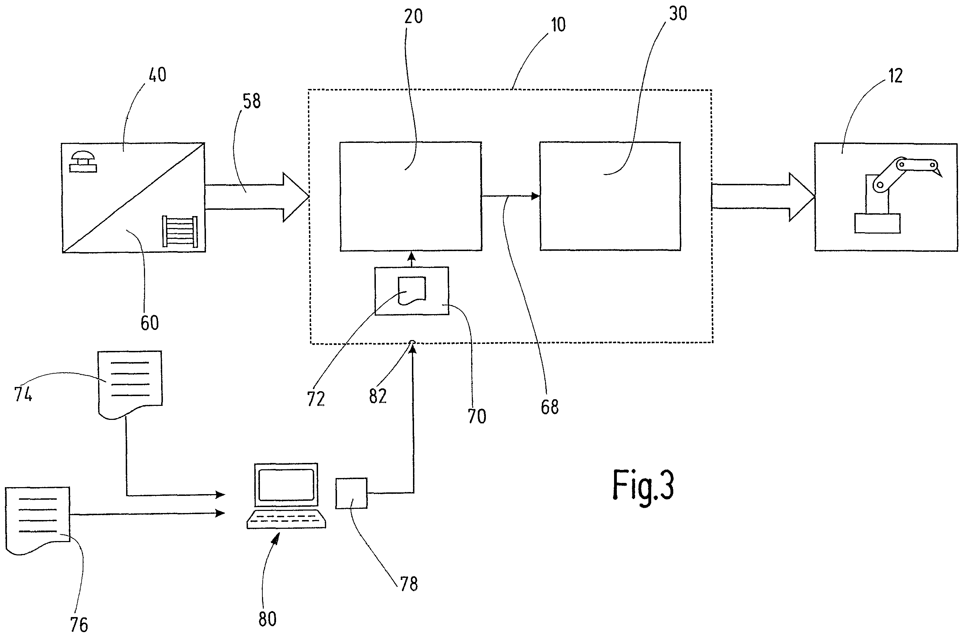

Die Fig. 3 zeigt schematisch den Aufbau und die Funktion der neuen Sicherheitssteuerung 10. An die Sicherheitssteuerung 10 können verschiedene Sicherheitsgeber 40, 60 angeschlossen werden. Mit der Bezugsziffer 40 ist hier ein Notausschalter gezeigt stellvertretend für passive Sicherheitsgeber. Die Bezugsziffer 60 steht hier stellvertretend für aktive Sicherheitsgeber, wie durch das Lichtgitter angedeutet. Die Sicherheitsgeber 40, 60 senden ihr Eingangssignal 58 an die Sicherheitssteuerung 10. Die Sicherheitssteuerung 10 kann zusätzlich auch ausgehende Verbindungen zu den Sicherheitsgebern haben, die hier der Übersicht halber weggelassen worden sind.

Die Sicherheitssteuerung 10 weist hier mindestens ein Eingangsmodul und ein Ausgangsmodul 30 auf. Das Eingangsmodul 20 wertet, wie im Folgenden näher erläutert, das Eingangssignal 58 aus und stellt ein Ausgangssignal 68 in Abhängigkeit des Eingangssignals 58 bereit. Anhand des Ausgangssignals 68 steuert das Ausgangsmodul die technische Anlage 12 an und schaltet diese ggf. ab oder führt sie in einen sicheren Zustand über.

Die Sicherheitssteuerung 10 verfügt über eine Einstelleinheit 70, in der Signalparameter 72 für die Auswertung des Eingangssignals 58 hinterlegt sind. Bei den Signalparametern 72 handelt es sich um Werte, die den Signalverlauf des Eingangssignals 58 beschreiben. Die Beschreibung des Eingangssignals 58 durch die Signalparameter 72 muss nicht zwangsläufig vollständig sein, sondern kann sich lediglich auf die Parameter beschränken, die nötig sind, um das Eingangssignal präzise und fehlersicher auszuwerten.

Die Signalparameter 72 setzen sich dabei vorzugsweise aus einem sicherheitsgeberspezifischen Teil 74 und einem anwendungsspezifischen Teil 76 zusammen. Der sicherheitsgeberspezifische Teil umfasst die Signalparameter 72, die ausschließlich vom Sicherheitsgeber abhängen. Dies könnten u.a. der Signal-/Sicherheitsgebertyp, die Testperiodendauer, die Testpulsdauer, die Verzögerungszeit Δt und/oder eine Eingangsfilterungszeit sein. Vorzugsweise ist der sicherheitsgeberspezifische Teil 74 in einem sogenannten elektronischen Datenblatt hinterlegt.

Der anwendungsspezifische Teil umfasst Signalparameter 72, die von der Anschlusstopologie abhängig sind. Dies könnten beispielsweise der Kabeltyp bzw. die Kabellänge der Leitung sein, mit dem der Sicherheitsgeber 40, 60 an die Sicherheitssteuerung 10 angeschlossen ist. Der anwendungsspezifische Teil umfasst somit jene Parameter, die das Eingangssignal 58 unabhängig vom Sicherheitsgeber 40, 60 beeinflussen.

Der sicherheitsgeberspezifische Teil und der anwendungsspezifische Teil sind vorzugsweise in einer Sensordefinitionsdatei 78 zusammengefasst. Dies kann auf einem externen Konfigurationssystem, hier durch einen PC 80 angedeutet, erfolgen. Mit dem Konfigurationssystem 80 kann der Benutzer vorzugsweise mit der Hilfe einer Anwendungsoberfläche anwendungsspezifische Daten eintragen und mit dem elektronischen Datenblatt des Sicherheitsgebers verbinden. Das elektronische Datenblatt ist dabei vorzugsweise in einer Bibliothek hinterlegt, so dass Eingabefehler beim Einstellen des Sicherheitsgebers ausgeschlossen werden können. Die vom Konfigurationssystem 80 erzeugt Sensordefinitionsdatei 78 kann den sicherheitsgeberspezifische Teil und der anwendungsspezifische Teil umfassen und kann über eine Kommunikationsschnittstelle 82 auf die Einstelleinheit 70 übertragen werden. Die Kommunikationsschnittstelle 82 kann durch eine kabelgebundene oder kabellose Übertragung realisiert sein. Alternativ kann die Kommunikationsschnittstelle auch durch eine manuelle Übertragung, beispielsweise mit Hilfe eines portablen Speichermediums, erfolgen.

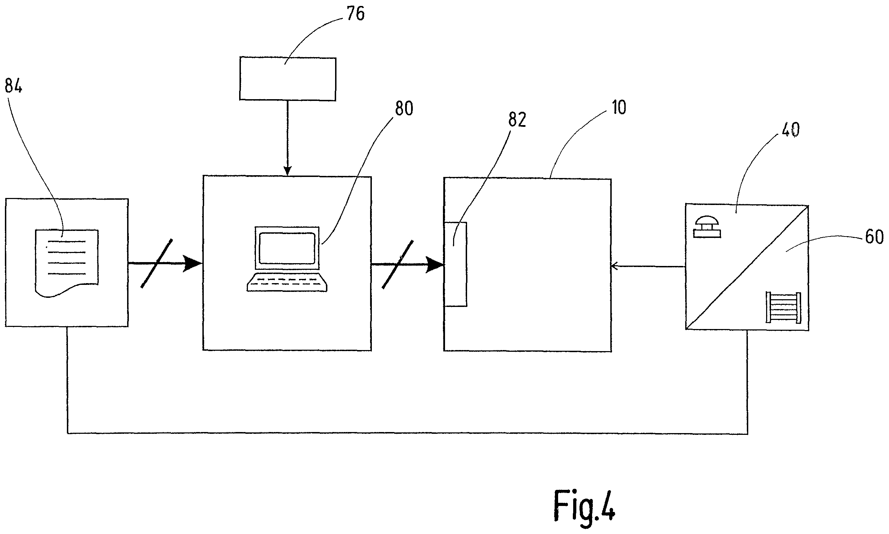

Alternativ können der sicherheitsgeberspezifische Teil und der anwendungsspezifische Teil auch getrennt bereitgestellt werden und erst in der Sicherheitssteuerung zusammengefasst werden. Beispielsweise werden die sicherheitsgeberspezifische Parameter in Form eines elektronischen Datenblatts an die Sicherheitssteuerung übertragen, während die anwendungsspezifischen Parameter unmittelbar an der Sicherheitssteuerung eingestellt werden. Jede Übertragung von sicherheitskritischen Parametern erfolgt dabei in einem "fail-safe"-System gesichert, wie es beispielhaft anhand der Fig. 4 näher erläutert ist.

Die Fig. 4 zeigt schematisch, wie die Signalparameter 72 auf die Einstelleinheit 70 der neuen Sicherheitssteuerung übertragen werden können. Mit den Bezugsziffern 40, 60 sind hier aktive oder passive Sicherheitsgeber angedeutet, die, wie anhand der Ausführungsbeispiele der Fig. 1 bis 3 beschrieben, mit der Sicherheitssteuerung 10 zusammenwirken. Die sicherheitsgeberspezifischen Daten sind in einem elektronischen Datenblatt 84 zusammengefasst.

Das elektronische Datenblatt wird gesichert auf das Konfigurationssystem 80 übertragen. Zur Sicherung der Übertragung kann das elektronische Datenblatt 84 eine Prüfsumme aufweisen, anhand derer das Konfigurationssystem 80 überprüfen kann, ob das elektronische Datenblatt 84 ohne Modifikationen übertragen worden ist. Alternativ kann das elektronische Datenblatt 84 auch in einer Bibliothek, die in einem Speicher des Konfigurationssystems hinterlegt ist, vorgehalten werden, so dass eine gesicherte Übertragung nicht notwendig ist.

Auf dem Konfigurationssystem 80 werden zusätzlich anwendungsspezifische Daten 76 zur Verfügung gestellt, vorzugsweise durch eine Benutzereingabe direkt am Konfigurationssystem 80. Das Konfigurationssystem 80 fügt die sicherheitsgeberspezifischen Daten des elektronischen Datenblatts 84 und die anwendungsspezifischen Daten 76 zu einer Sensordefinitionsdatei 78 zusammen. Beim Zusammenfügen führt das Konfigurationssystem 80 zusätzlich einen Plausibilitätscheck durch. Anhand dieses Plausibilitätschecks überprüft die Konfigurationseinheit 80, ob die vom Benutzer eingegebenen anwendungsspezifischen Daten 76 mit sicherheitsgeberspezifischen Daten des elektronischen Datenblatts eine valide Konfiguration für die Sicherheitssteuerung 10 ergeben. Anschließend wird die Sensordefinitionsdatei 78 über eine gesicherte Verbindung auf die Sicherheitssteuerung 10 übertragen und in der Einstelleinheit 70 hinterlegt.

In einem alternativen Ausführungsbeispiel kann das Konfigurationssystem 80 auch in der Sicherheitsteuerung 10 integriert sein. Vorzugsweise weist die Sicherheitssteuerung hierzu eine Eingabeeinheit auf, über die eine Eingabe der anwendungsspezifischen und/oder sicherheitsgeberspezifischen Daten erfolgen kann. In eine weiteren Ausführung können die anwendungsspezifischen Daten auch getrennt von den sicherheitsgeberspezifischen Daten zur Verfügung gestellt werden, beispielsweise indem die sicherheitsgeberspezifischen Daten von extern der Sicherheitsteuerung bereitgestellt werden und die anwendungsspezifischen Daten unmittelbar an der Sicherheitsteuerung eingegeben werden.

Als Kommunikationsschnittstelle 82 kann alternative auch ein Netzwerkanschluss oder eine Schnittstelle für portable Speichermedien in Betracht kommen. Ferner können für eine sichere Übertragung und Verifikation auch andere Verfahren neben der genannten Prüfsummenauswertung verwendet werden.

## Patentansprüche

1. Sicherheitssteuerung (10) mit konfigurierbaren Eingängen zum Ein- und sicheren Ausschalten mindestens eines Aktors, mit
zumindest einem Eingangsmodul (20) zum Auswerten eines Eingangssignals (58) eines Sicherheitsgebers und zum Erzeugen eines Ausgangssignals und
mit zumindest einem Ausgangsmodul (30) zum sicheren Betätigen des Aktors abhängig von dem Ausgangssignal des Eingangsmoduls (20),
wobei das Eingangssignal (58) in Abhängigkeit der Art des Sicherheitsgebers verschiedene Signalparameter (72) aufweist, wobei es sich bei den Signalparametern (72) um Werte handelt, die den Signalverlauf des Eingangssignals (58) beschreiben,
wobei die Sicherheitssteuerung eine Einstelleinheit (70) mit einem Speicher aufweist, in dem die Signalparameter (72) für das Eingangsmodul (20) hinterlegt werden,
wobei das Eingangsmodul (20) das Eingangssignal (58) in Abhängigkeit der Signalparameter (72) fehlersicher auswertet,
wobei das Eingangssignal (58) ein dynamisches Taktsignal mit Testimpulsen (66) ist,
wobei ein erster Signalparameter die Testperiode zwischen den Testimpulsen repräsentiert und ein zweiter Signalparameter die Testpulsdauer repräsentiert, wobei der Sicherheitsgeber mit der Sicherheitssteuerung über eine elektrische Leitung (22) mit spezifischen Eigenschaften verbunden ist, und wobei die Signalparameter (72) weitere Parameter aufweisen, die die spezifischen Eigenschaften repräsentieren.

2. Sicherheitssteuerung nach Anspruch 1, wobei das Eingangsmodul (20) einen ersten Eingang zum Anschließen des Sicherheitsgebers und mindestens einen zweiten Eingang zum Anschließen eines weiteren Sicherheitsgebers aufweist, wobei für den Sicherheitsgeber ein erster Satz an Signalparametern und für den weiteren Sicherheitsgeber ein zweiter Satz an Signalparametern in der Einstelleinheit (70) hinterlegbar ist.

3. Sicherheitssteuerung nach einem der Ansprüche 1 bis 2, wobei die Sicherheitssteuerung mindestens einen Testausgang (46) zum Bereitstellen eines Testsignals (48) aufweist und der Sicherheitsgeber mit einer Verzögerungszeit Δt in Abhängigkeit des Testsignals (48) das Eingangssignal (58) erzeugt, wobei die Verzögerungszeit Δt ein Parameter der Signalparameter (72) ist.

4. Sicherheitssteuerung nach einem der Ansprüche 1 bis 43, wobei die Sicherheitssteuerung zur Konfiguration der Einstelleinheit (70) ein Konfigurationssystem mit einer Kommunikationsschnittstelle (82) aufweist, über die ein Satz an Signalparametern (72) an die Einstelleinheit (70) übertragen werden kann.

5. Sicherheitssteuerung nach Anspruch 4, wobei für den Sicherheitsgeber die Signalparametern (72) in einem Satz zusammengefasst sind und in einer Sensordefinitionsdatei (78) hinterlegt sind, wobei die Sensordefinitionsdatei einen Sensordatenabschnitt (74) mit sicherheitsgeberspezifische Parametern des Sicherheitsgebers und einen Anwendungsdatenabschnitt (76) mit anwendungsspezifischen Parametern umfasst.

6. Sicherheitssteuerung nach Anspruch 5, wobei die Sensordefinitionsdatei eine individuelle Prüfsumme aufweist und das Konfigurationssystem (80) anhand der Prüfsumme die Sensordefinitionsdatei (78) authentifiziert.

7. Sicherheitssteuerung nach einem der Ansprüche 5 bis 6, wobei das Konfigurationssystem mindestens einen Prüfalgorithmus zur Plausibilitätsprüfung aufweist, der den Anwendungsdatenabschnitt (76) im Bezug auf den Sensordatenabschnitt (74) überprüft.

8. Verfahren zum Ein- und sicheren Ausschalten mindestens eines Aktors mit den Schritten:
- Bereitstellen eines Sicherheitsgebers (40, 60) zum Erzeugen eines Eingangssignals (58) in Abhängigkeit eines zu überwachenden sicherheitskritischen Prozesses;
- Bereitstellen einer Sicherheitssteuerung (10) mit konfigurierbaren Eingängen und mit zumindest einem Eingangsmodul (20) und einem Ausgangsmodul (30);
- Hinterlegen von Signalparametern (72) für das Eingangssignal (58) in Abhängigkeit der Art des Sicherheitsgebers (40, 60) in einer Einstelleinheit (70) der Sicherheitssteuerung (10), wobei es sich bei den Signalparametern (72) um Werte handelt, die den Signalverlauf des Eingangssignals (58) beschreiben;
- fehlersicheres Auswerten des Eingangssignals (58) durch das Eingangsmodul (20) in Abhängigkeit der in der Einstelleinheit (70) hinterlegten Signalparameter (72);
- Erzeugen eines Ausgangssignals (68) für das Ausgangsmodul (30) in Abhängigkeit der Auswertung;
- Betätigen des Aktors durch das Ausgangsmodul (30) in Abhängigkeit des Ausgangssignals (68),
wobei das Eingangssignal (58) ein dynamisches Taktsignal mit Testimpulsen (66) ist,
wobei ein erster Signalparameter die Testperiode zwischen den Testimpulsen repräsentiert und ein zweiter Signalparameter die Testpulsdauer repräsentiert,
wobei der Sicherheitsgeber mit der Sicherheitssteuerung über eine elektrische Leitung (22) mit spezifischen Eigenschaften verbunden ist, und wobei die Signalparameter (72) weitere Parameter aufweisen, die die spezifischen Eigenschaften repräsentieren.

9. Verfahren nach Anspruch 8 mit den weiteren Schritten:
- Erfassen von Signalparametern (72) für einen Sicherheitsgeber (40, 60) in einer Sensordefinitionsdatei (78);
- Ermitteln einer Prüfsumme für die Sensordefinitionsdatei (78);
- Übertragen der Sensordefinitionsdatei (78) auf die Sicherheitssteuerung;
- Authentifizieren der Sensordefinitionsdatei (78) anhand der Prüfsumme.

## Claims

1. Safety control device (10) with configurable inputs for switching at least one actuator on and safely off, having
at least one input module (20) for evaluating an input signal (58) of a safety transmitter and for generating an output signal, and
having at least one output module (30) for safely actuating the actuator depending on the output signal of the input module (20),
wherein the input signal (58) comprises different signal parameters (72) depending on the type of safety transmitter, wherein the signal parameters (72) are values which describe the signal form of the input signal (58),
wherein the safety control device comprises a setting unit (70) with a memory in which the signal parameters (72) for the input module (20) are stored,
wherein the input module (20) evaluates the input signal (58) in a fail-safe manner based on the signal parameters (72),
wherein the input signal (58) is a dynamic clock signal having test pulses (66),
wherein a first signal parameter represents the test period between the test pulses and a second signal parameter represents the test pulse duration,
wherein the safety transmitter is connected to the safety control device via an electrical line (22) having specific properties, wherein said signal parameters (72) comprise further parameters representing said specific properties.

2. Safety control device according to claim 1, wherein the input module (20) comprises a first input for connecting said safety transmitter and at least one second input for connecting a further safety transmitter, wherein a first set of signal parameters can be stored in the setting unit (70) for the safety transmitter and a second set of signal parameters can be stored in the setting unit (70) for the further safety transmitter.

3. Safety control device according to any one of claims 1 to 2, wherein the safety control device comprises at least one test output (46) for providing a test signal (48) and the safety transmitter generates the input signal (58) with a delay time Δt based on the test signal (48), wherein the delay time Δt is a parameter of the signal parameters (72).

4. Safety control device according to any one of claims 1 to 3, wherein the safety control device comprises, for configuring the setting unit (70), a configuration system having a communication interface (82) through which a set of signal parameters (72) can be transmitted to the setting unit (70).

5. Safety control device according to claim 4, wherein for said safety transmitter the signal parameters (72) are combined in a set and are stored in a sensor definition file (78), wherein the sensor definition file comprises a sensor data section (74) with safety transmitter-specific parameters of the safety transmitter and an application data section (76) with application-specific parameters.

6. Safety control device according to claim 5, wherein the sensor definition file comprises an individual checksum and the configuration system (80) authenticates the sensor definition file (78) based on the checksum.

7. Safety control device according to any one of claims 5 to 6, wherein the configuration system comprises at least one plausibility-checking algorithm that checks the application data section (76) with respect to the sensor data section (74).

8. Method for switching on and safely off at least one actuator comprising the steps:
- Providing a safety transmitter (40, 60) for generating an input signal (58) depending on a safety-critical process to be monitored;
- Providing a safety control device (10) with configurable inputs having at least one input module (20) and one output module (30);
- Depositing signal parameters (72) for the input signal (58) depending on the type of safety transmitter (40, 60) in a setting unit (70) of the safety control device (10), wherein the signal parameters (72) are values which describe the signal form of the input signal (58);
- Evaluating the input signal (58) by the input module (20) in a fail-safe manner based on the signal parameters (72) stored in the setting unit (70);
- Generating an output signal (68) for the output module (30) based on the evaluation;
- Actuating the actuator by the output module (30) based on the output signal (68),
wherein the input signal (58) is a dynamic clock signal having test pulses (66),
wherein a first signal parameter represents the test period between the test pulses and a second signal parameter represents the test pulse duration,
wherein the safety transmitter is connected to the safety control device via an electrical line (22) having specific properties, wherein said signal parameters (72) comprise further parameters representing said specific properties.

9. Method according to claim 8 with the further steps:
- Acquiring signal parameters (72) for a safety transmitter (40, 60) in a sensor definition file (78);
- Determining a checksum of the sensor definition file (78);
- Transmitting the sensor definition file (78) to the safety control device;
- Authenticating the sensor definition file (78) using the checksum.

## Revendications

1. Commande de sécurité (10) avec entrées configurables destinée à la connexion et à la déconnexion sûre d'au moins un actionneur, la commande de sécurité comprenant :
au moins un module d'entrée (20) destiné à évaluer un signal d'entrée (58) d'un capteur de sécurité et à générer un signal de sortie et
au moins un module de sortie (30) destiné à actionner de manière sûre l'actionneur en fonction du signal de sortie du module d'entrée (20),
le signal d'entrée (58) comportant différents paramètres de signal (72) en fonction du type du capteur de sécurité, les paramètres de signal (72) étant des valeurs qui décrivent l'allure du signal d'entrée (58),
dans lequel la commande de sécurité comprend une unité de réglage (70) avec une mémoire dans laquelle les paramètres de signal (72) pour le module d'entrée (20) sont stockés,
dans lequel le module d'entrée (20) évalue le signal d'entrée (58) de manière sécurisée sur la base des paramètres de signal (72),
dans lequel le signal d'entrée (58) est un signal d'horloge dynamique comportant des impulsions de test (66),
dans lequel un premier paramètre de signal représente la période de test entre les impulsions de test et un second paramètre de signal représente la durée de l'impulsion de test,
dans lequel le capteur de sécurité est connecté au dispositif de commande de sécurité par l'intermédiaire d'une ligne électrique (22) ayant des propriétés spécifiques, dans lequel lesdits paramètres de signal (72) comprennent d'autres paramètres représentant lesdites propriétés spécifiques.

2. Commande de sécurité selon la revendication 1, le module d'entrée (20) comportant une première entrée destinée à connecter le capteur de sécurité et au moins une deuxième entrée destinée à connecter un autre capteur de sécurité, un premier ensemble de paramètres de signal pouvant être mémorisé pour le capteur de sécurité, et un deuxième ensemble de paramètres de signal pouvant être mémorisé pour l'autre capteur de sécurité dans l'unité de réglage (70).

3. Commande de sécurité selon l'une des revendications 1 et 2, la commande de sécurité comportant au moins une sortie de test (46) destinée à produire un signal de test (48) et le capteur de sécurité générant le signal d'entrée (58) en fonction du signal de test (48) avec un temps de retard Δt, le temps de retard Δt étant un paramètre des paramètres de signal (72).

4. Commande de sécurité selon l'une des revendications 1 à 3, la commande de sécurité comprenant, pour configurer l'unité de réglage (70), un système de configuration pourvu d'une interface de communication (82) permettant de transmettre un ensemble de paramètres de signal (72) à l'unité de réglage (70).

5. Commande de sécurité selon la revendication 4, les paramètres de signal (72) étant rassemblés en un ensemble et étant mémorisés dans un fichier de définition de capteur (78) pour le capteur de sécurité, le fichier de définition de capteur comprenant une partie de données de capteur (74) qui comporte des paramètres spécifiques au capteur de sécurité et une partie de données d'application (76) qui comporte des paramètres spécifiques à l'application.

6. Commande de sécurité selon la revendication 5, le fichier de définition de capteur comportant une somme de contrôle individuelle, et le système de configuration (80) authentifiant le fichier de définition de capteur (78) sur la base de la somme de contrôle.

7. Commande de sécurité selon l'une des revendications 5 et 6, le système de configuration comportant au moins un algorithme de contrôle destiné au contrôle de plausibilité qui vérifie la partie de données d'application (76) par rapport à la partie de données de capteur (74).

8. Procédé de connexion et de déconnexion d'au moins un actionneur, le procédé comprenant les étapes suivantes :
- produire un capteur de sécurité (40, 60) destiné à générer un signal d'entrée (58) en fonction d'un processus à sécurité critique à surveiller ;
- produire une commande de sécurité (10) avec des entrées configurables et comprenant au moins un module d'entrée (20) et un module de sortie (30) ;
- mémoriser des paramètres de signal (72) destinés au signal d'entrée (58) en fonction du type du capteur de sécurité (40, 60) dans une unité de réglage (70) de la commande de sécurité (10), les paramètres de signal (72) étant des valeurs qui décrivent l'allure du signal d'entrée (58);
- évaluer de manière sécurisée du signal le signal d'entrée (58) par le biais du module d'entrée (20) en fonction des paramètres de signal (72) mémorisés dans l'unité de réglage (70) ;
- générer un signal de sortie (68) destiné au module de sortie (30) en fonction de l'évaluation ;
- actionner l'actionneur par le biais du module de sortie (30) en fonction du signal de sortie (68),
dans lequel le signal d'entrée (58) est un signal d'horloge dynamique comprenant des impulsions de test (66),
dans lequel un premier paramètre de signal représente la période de test entre les impulsions de test et un second paramètre de signal représente la durée de l'impulsion de test,
dans lequel le capteur de sécurité est connecté à la commande de sécurité par l'intermédiaire d'une ligne électrique (22) ayant des caractéristiques spécifiques, les paramètres de signal (72) comprenant d'autres paramètres représentant les caractéristiques spécifiques.

9. Procédé selon la revendication 8 comprenant les autres étapes suivantes :
- détecter des paramètres de signal (72) destinés à un capteur de sécurité (40, 60) dans un fichier de définition de capteur (78) ;
- déterminer une somme de contrôle pour le fichier de définition de capteur (78) ;
- transmettre le fichier de définition de capteur (78) à la commande de sécurité ;
- authentifier le fichier de définition de capteur (78) sur la base de la somme de contrôle.
